# EUROPEAN PATENT SPECIFICATION

(11) **EP 3 785 975 B1**
(45) Date of publication and mention of the grant of the patent: **28.10.2026**
(21) Application number: 20189740.2
(22) Date of filing: 06.08.2020
(51) Int. Cl.: B60L 3/00, B60L 3/04, B60L 58/10

(54) **CONTROL METHOD FOR VEHICLE POWER SUPPLY APPARATUS, VEHICLE POWER SUPPLY APPARATUS, VEHICLE, AND COMPUTER PROGRAM PRODUCT**
STEUERUNGSVERFAHREN FÜR EINE FAHRZEUGSTROMVERSORGUNGSVORRICHTUNG, FAHRZEUGSTROMVERSORGUNGSVORRICHTUNG, FAHRZEUG UND COMPUTERPROGRAMMPRODUKT
PROCÉDÉ DE COMMANDE D'APPAREIL D'ALIMENTATION ÉLECTRIQUE DE VÉHICULE, APPAREIL D'ALIMENTATION ÉLECTRIQUE DE VÉHICULE, VÉHICULE ET PRODUIT DE PROGRAMME INFORMATIQUE

(30) Priority: 20.08.2019 JP 2019150465
(43) Date of publication of application: 03.03.2021
(73) Proprietor: MAZDA MOTOR CORPORATION, Hiroshima 730-8670 (JP)
(72) Inventor: SHIRAISHI, Wataru, Fuchu-cho, Aki-gun,, Hiroshima 730-8670 (JP); FUJIOKA, Shinya, Fuchu-cho, Aki-gun,, Hiroshima 730-8670 (JP)
(74) Representative: Müller-Boré & Partner Patentanwälte PartG mbB

(56) References cited:
- EP-A1- 3 208 135
- EP-A1- 3 396 089
- WO-A1-2014/030190
- JP-A- 2006 141 158
- JP-A- 2018 074 656
- US-A1- 2002 177 931
- US-A1- 2017 294 791

## Description

### [Technical Field]

The present invention relates to a control method for a vehicle power supply apparatus, a vehicle power supply apparatus, a vehicle, and a computer program product.

### [Background Art]

In recent years, spread of electric vehicles, each of which includes a motor as a drive source, has been accelerated. A drive power supply such as a lithium-ion battery for supplying electric power to the motor is mounted on each of such vehicles. DC power that is output from the drive power supply is supplied to in-vehicle equipment such as an inverter, is converted into AC power, and is then supplied to the motor. In addition to the drive power supply, a controller for controlling the inverter and the like and an auxiliary power supply for supplying the electric power to the controller are mounted on the electric vehicle.

In order for the motor to generate high torque that is required for travel of the vehicle, the drive power supply outputs the high-voltage DC power. This electric power is stored as electric charges in a capacitor of a circuit in the in-vehicle equipment, and the like. In order to increase safety of the vehicle at the time of a collision accident with an obstacle (for example, another vehicle, a structure on a road, or the like), it is obliged in regulations to reduce a voltage of the specified in-vehicle equipment to be equal to or lower than a specified value within a specified time period from the collision of the vehicle. As such an electric discharging method, a method for supplying the electrical charges from the in-vehicle equipment to the motor by operating the inverter and converting electrical energy into thermal energy in the motor has been known. In addition, it is obliged in the regulations to smoothly unlock vehicle doors for a prompt escape of an occupant during the collision of the vehicle.

Due to a limitation on a space, the above-described auxiliary power supply is frequently provided in a motor room in a front portion of the vehicle. As means for further stably supplying the electric power to the controller that controls the inverter and the controller that controls door locks of the vehicle even in a case of a frontal collision of the vehicle, and the like, it is considered to mount a backup power supply on the vehicle in addition to the auxiliary power supply.

An unlocking device for a vehicle door is disclosed in Patent document 1. This device includes a backup power supply (a spare power supply) that is independent from a primary power supply, and supplies the electric power from this backup power supply to the controller that controls the door lock. With this configuration, even in the case where the electric power cannot be supplied from the primary power supply, the door can be unlocked by supplying the electric power from the backup power supply to the controller.

### [Prior Art Documents]

### [Patent documents]

[Patent document 1] JP-A-2003-262054
US 2017/294791 A1 describes that the collision detector transmits a first signal and a second signal that follows the first signal when detecting the collision. The inverter control circuit stops supplying the electric power to a switching element drive circuit when receiving the first signal. The inverter control circuit discharges the smoothing capacitor when receiving the second signal.

EP 3 396 089 A1 describes that the control device controls the locking and unlocking motor to unlock after a prescribed amount of time passes from a collision detection when a collision detection means for detecting automobile collisions detects a collision.

EP 3 208 135 A1 describes that the capacitor discharges a residual electric charge in a case where the possibility of the occurrence of the collision of the vehicle is detected or in a case where the occurrence of the collision of the vehicle is detected.

JP 2006 141158 A describes that a command signal is outputted to MG_ECU so as to discharge the smoothing capacitor by motor zero torque processing.

### [Summary]

### [Problem to be solved]

In order to reliably comply with the above-described regulation, it is considered not only to unlock the door but also to discharge the electric power of an inverter by using the electric power supplied from a capacitor provided separately from a drive power supply and an auxiliary power supply. However, in the case where such a capacitor capable of outputting high electric power in a short time is used after the collision of the vehicle, there is a problem that the capacitor may be enlarged.

The present invention has been made to solve the above-described problem and therefore has a purpose of reliably unlocking a door and discharging electric power of an inverter.

### [Means for solving the Problem]

The above-described purpose is achieved by the invention which is a control method as defined in claim 1 or a vehicle power supply apparatus as defined in claim 4.

According to the invention, in the case where the vehicle collides with the obstacle, first, in the discharging step, the electric power of the inverter is discharged by using the electric power that is supplied from the capacitor. Then, after the lapse of the specified time period since the initiation timing of the discharging step, in the unlocking step, the door is unlocked by using the electric power that is supplied from the capacitor. Just as described, since initiation timing, at which a prominent reduction in a voltage occurs, differs between the motor controller and the door lock controller, the electric power, an amount of which is sufficient for the operation of each thereof, is supplied. As a result, the electric power of the inverter can be discharged, and the door of the vehicle can be unlocked.

In the present invention, after termination of the discharging step, the unlocking step is initiated.

According to this configuration, it is possible to further reliably supply the electric power, the amount of which is sufficient for the operation of each of the motor controller and the door lock controller. As a result, the electric power of the inverter can be discharged, and the door of the vehicle can be unlocked.

### [Advantage]

The present invention has the purpose of providing a control method for a vehicle power supply apparatus capable of reliably unlocking the door and discharging the electric power of the inverter by using the electric power supplied from the capacitor, and of providing the vehicle power supply apparatus.

### [Brief Description of the Drawings]

[Fig. 1] Fig. 1 is a layout view of a vehicle on which a vehicle power supply apparatus according to an embodiment is mounted.
[Fig. 2] Fig. 2 is a time chart illustrating a current flowing through a motor controller and a door lock controller from a capacitor in Fig. 1.
[Fig. 3] Fig. 3 is a flowchart illustrating processing executed by the motor controller and the door lock controller in Fig. 1.

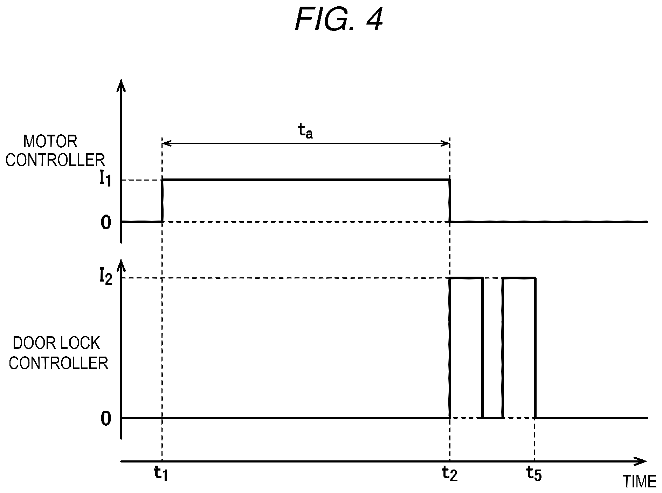

[Fig. 4] Fig. 4 is a time chart illustrating a current flowing through a motor controller and a door lock controller from a capacitor for a vehicle power supply apparatus according to another embodiment.

### [Embodiments]

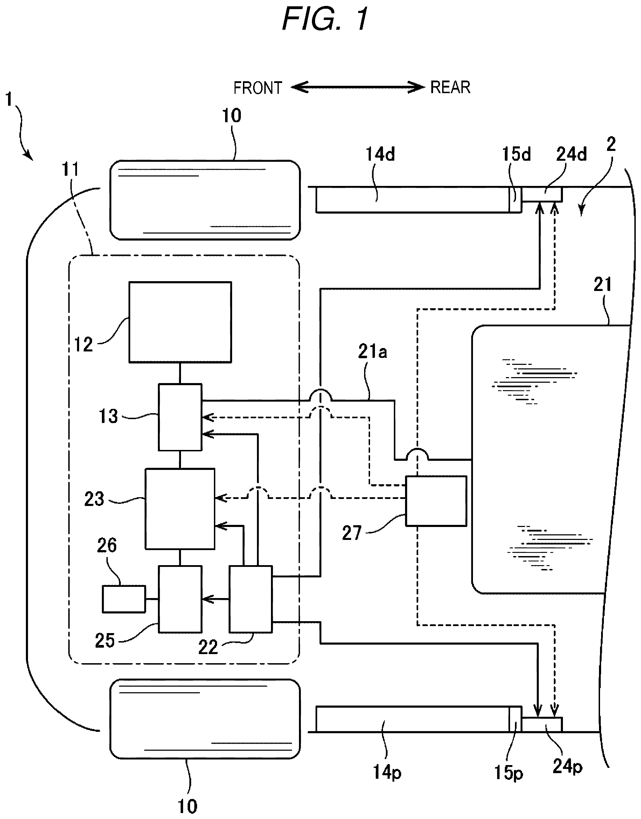

A description will hereinafter be made on a vehicle power supply apparatus 2 according to an embodiment with reference to the accompanying drawings. First, a description will be made on a vehicle 1 on which the vehicle power supply apparatus 2 is mounted with reference to Fig. 1. Fig. 1 is a layout view of the vehicle 1 on which the vehicle power supply apparatus 2 is mounted, and illustrates a front portion of the vehicle 1.

A motor room (or motor compartment) 11 is formed in front of a driver's seat and a passenger's seat, which are not illustrated, in the vehicle 1. A motor (or electric motor) 12 and an inverter 13 are arranged in the motor room 11. The motor 12 is a rotary electric machine that generates torque when being supplied with AC power and causes front wheels 10 of the vehicle 1 to rotate. The inverter 13 is electronic equipment that has plural capacitors and a switching element( or switching elements). The inverter 13 converts DC power into three-phase AC power by switching an on state and an off state of the switching element, and supplies the three-phase AC power to the motor 12. In the motor room 11, equipment such as an unillustrated converter is also arranged. The converter transforms electric power supplied from a drive power supply 21, which will be described later.

The vehicle 1 includes a door 14d on the driver's seat side, a door 14p on the passenger's seat side, and door locks 15d, 15p for respectively locking and unlocking the doors 14d, 14p. Each of the door locks 15d, 15p has an actuator, which is not illustrated. The doors 14d, 14p are locked or unlocked when the actuator is operated on the basis of or in response to a received locking signal and a received unlocking signal.

The vehicle power supply apparatus 2 is mounted on the vehicle 1 that has such a configuration, and supplies in-vehicle equipment with the electric power that is required for operation thereof. The vehicle power supply apparatus 2 includes the drive power supply 21 and an auxiliary power supply 22.

The drive power supply 21 is a lithium-ion battery that stores the electric power. The drive power supply 21 is arranged in a substantially central portion of the vehicle 1 in a vehicle longitudinal direction and a vehicle width direction, extends from a position below the driver's seat and the passenger's seat of the vehicle 1 to a position below a rear seat. A charging port, which is not illustrated, is provided on a rear side surface of the vehicle 1, and the drive power supply 21 can store the electric power that is supplied from outside of the vehicle 1 via this charging port. The drive power supply 21 is configured to be able to output high-voltage DC power to the inverter 13 via a harness 21a.

The auxiliary power supply 22 is particularly a lead-acid battery capable of outputting 12-V DC power. The auxiliary power supply 22 is particularly arranged in the motor room 11. The auxiliary power supply 22 is configured to be supplied with the electric power that is generated by a generator, which is not illustrated, and be able to store the electric power.

Furthermore, the vehicle power supply apparatus 2 includes a motor controller 23, door lock controllers 24d, 24p, a collision determination device 25, and an acceleration sensor 26. These types of the in-vehicle equipment are configured to be mutually communicable by using a specified protocol via a controller area network (CAN), which is not illustrated and mounted on the vehicle 1.

The motor controller 23 is an electronic controller that controls supply of the electric power to the motor 12. The motor controller 23 is arranged in the motor room 11. In detail, the motor controller 23 controls the electric power to be supplied to the motor 12 from the inverter 13 by transmitting a control signal to the inverter 13, and thereby controls operation of the motor 12.

The door lock controllers 24d, 24p are electronic controllers that respectively control the door locks 15d, 15p. The door lock controllers 24d, 24p are particularly arranged near the doors 14d, 14p, respectively. The door lock controllers 24d, 24p respectively operate the actuators of the door locks 15d, 15p by transmitting the locking signal or the unlocking signal to the door locks 15d, 15p and thereby lock or unlock the doors 14d, 14p. That is, the door lock controllers 24d, 24p respectively supply the door locks 15d, 15p with the electric power, an amount of which is sufficient for operation of the actuators, as the locking signal or the unlocking signal. The door lock controllers 24d, 24p may respectively be unitized with the door locks 15d, 15p.

The collision determination device 25 is electronic equipment that determines whether the vehicle 1 has collided with an obstacle (for example, another vehicle, a structure on a road, or the like). The collision determination device 25 is particularly arranged in the motor room 11. The collision determination device 25 receives a signal from the acceleration sensor 26 that detects acceleration of the vehicle 1, and determines whether the vehicle 1 has collided with the obstacle on the basis of the signal. In detail, the collision determination device 25 integrates a value that is based on the signal received from the acceleration sensor 26, and determines that the vehicle 1 has collided with the obstacle when an integral value in a specified period exceeds a threshold value. When determining that the vehicle 1 has collided with the obstacle, the collision determination device 25 transmits a collision signal to the motor controller 23, the door lock controllers 24d, 24p, and an airbag system, which is not illustrated.

Furthermore, the vehicle power supply apparatus 2 includes a capacitor 27 capable of storing electric power. The capacitor 27 is provided as a component separate from the drive power supply 21 and the auxiliary power supply 22 and is provided below the passenger's seat. The capacitor 27 has smaller capacity than the drive power supply 21 and the auxiliary power supply 22.

In Fig. 1, electric power supply routes from the auxiliary power supply 22 are indicated by solid arrows extending from the auxiliary power supply 22. The auxiliary power supply 22 can supply the electric power to the inverter 13, the motor controller 23, the door lock controllers 24d, 24p, and the collision determination device 25.

In Fig. 1, electric power supply routes from the capacitor 27 are indicated by broken arrows extending from the capacitor 27. The capacitor 27 can supply the electric power to the inverter 13, the motor controller 23, and the door lock controlle

In the case where the vehicle 1 is operated normally without being involved in the collision with the obstacle, the motor controller 23 and the door lock controllers 24d, 24p can be operated by using the electric power that is supplied from the auxiliary power supply 22. The motor controller 23 controls the operation of the motor 12 by controlling the inverter 13, and causes the motor 12 to generate travel torque. The door lock controllers 24d, 24p respectively lock or unlock the doors 14d, 14p in response to a request of an occupant or the like. At this time, the auxiliary power supply 22 independently outputs the electric power, the amount of which is sufficient for the operation of the motor controller 23 and the door lock controllers 24d, 24p. That is, the motor controller 23 and the door lock controllers 24d, 24p are operated by only using the electric power that is supplied from the auxiliary power supply 22 without being supplied with the electric power from the backup power supply 27.

Meanwhile, in the case where the auxiliary power supply 22 or the electric power supply route thereof fails due to the collision of the vehicle 1 with the obstacle, and thus the electric power cannot be supplied from the auxiliary power supply 22 to the motor controller 23 and the door lock controllers 24d, 24p, the motor controller 23 and the door lock controllers 24d, 24p can be operated by using the electric power that is supplied from the backup power supply 27. That is, the backup power supply 27 independently outputs the electric power, the amount of which is sufficient for the operation of the motor controller 23 and the door lock controllers 24d, 24p.

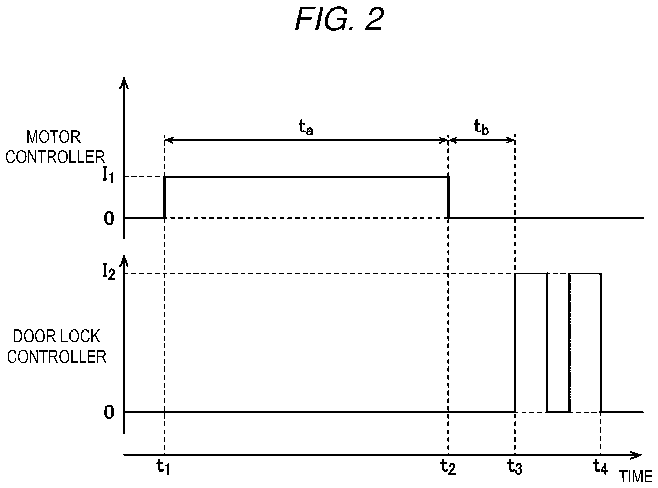

Next, a description will be made on the operation of the motor controller 23 and the door lock controllers 24d, 24p in the case where the vehicle 1 collides with the obstacle with reference to Fig. 2. Fig. 2 is a time chart illustrating a current flowing through the motor controller 23 and the door lock controllers 24d, 24p from the backup power supply 27.

At time t₁, the collision determination device 25 determines that the vehicle 1 has collided with the obstacle. Then, the collision determination device 25 transmits the collision signal to the motor controller 23 and the door lock controllers 24d, 24p. Thereafter, the motor controller 23 that has received the collision signal first starts being operated by using the electric power that is supplied from the backup power supply 27. At this time, a current I₁ flows through the motor controller 23 from the backup power supply 27.

The motor controller 23, which is operated by using the electric power supplied from the capacitor 27, controls the inverter 13 and supplies the motor 12 with electric charges stored in the capacitors of the inverter 13. In detail, the motor controller 23 appropriately switches the switching element of the inverter 13 between the on state and the off state, and supplies the electric charges from the inverter 13 to the motor 12 such that a current, referred to as a d-axis current, with which torque is not generated flows through the motor 12. As a result, electrical energy is converted into thermal energy in the motor 12, and the electric power of the inverter 13 is discharged.

At time t₂ at which a time period tₐ elapses from the time t₁, the motor controller 23 stops being operated by using the electric power supplied from the backup power supply 27. The time period tₐ is set as a sufficient time period (for example, five seconds) for discharging the electric power of the in-vehicle equipment.

At time t₃ at which a time period t_{b} elapses from the time t₂, the door lock controllers 24d, 24p start being operated by using the electric power supplied from the backup power supply 27. At this time, a current I₂ flows through each of the door lock controllers 24d, 24p from the backup power supply 27. The current I₂ is larger than the above-described current I₁.

The door lock controllers 24d, 24p, which are operated by using the electric power supplied from the backup power supply 27, respectively transmit the unlocking signal to the door locks 15d, 15p and operate the actuators thereof. As a result, the doors 14d, 14p are unlocked.

At time t₄ at which the transmission of the unlocking signal is completed, the door lock controllers 24d, 24p stop being operated by using the electric power supplied from the backup power supply 27. The electric power of the in-vehicle equipment is discharged, and the doors 14d, 14p are unlocked. Thus, the occupant can safely escape through the doors 14d, 14p.

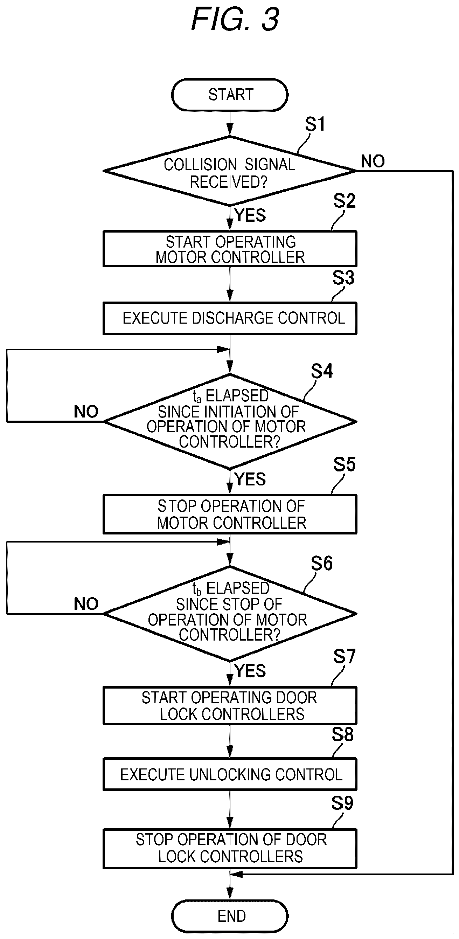

Next, a description will be made on processing that is executed by the motor controller 23 and the door lock controllers 24d, 24p with reference to Fig. 3. Fig. 3 is a flowchart illustrating the processing executed by the motor controller 23 and the door lock controllers 24d, 24p. The processing is repeatedly executed in a specified cycle. All of the steps as shown in Fig. 3 may not necessarily be essential.

In step S1, the motor controller 23 and the door lock controllers 24d, 24p determine whether the collision signal is received from the collision determination device 25. If determining that the collision signal is not received (S1: NO), the motor controller 23 and the door lock controllers 24d, 24p do not use the electric power supplied from the backup power supply 27, and the processing is terminated. On the other hand, if the motor controller 23 and the door lock controllers 24d, 24p determine that the collision signal is received (S1: YES), the processing proceeds to step S2. Step S1 corresponds to the "collision determination step" according to the present invention.

In step S2, the motor controller 23 starts being operated by using the electric power that is supplied from the capacitor 27. Then, in step S3, the motor controller 23 executes discharge control. That is, the motor controller 23 supplies the motor 12 with the electric charges stored in the capacitors of the inverter 13, so as to discharge the electric power of the inverter 13. Step S3 corresponds to a "discharging step" according to the present invention.

In step S4, the motor controller 23 determines whether the time period tₐ has elapsed since the initiation of the operation of the motor controller 23. If the motor controller 23 determines that the time period tₐ has elapsed (S4: YES), the processing proceeds to step S5.

In step S5, the motor controller 23 stops being operated by using the electric power that is supplied from the backup power supply 27. As a result, the motor controller 23 terminates the execution of the discharge control.

In step S6, the door lock controllers 24d, 24p determine whether the time period t_{b} has elapsed since the stop of the operation of the motor controller 23 by using the electric power that is supplied from the backup power supply 27. If the door lock controllers 24d, 24p determine that the time period t_{b} has elapsed (S6: YES), the processing proceeds to step S7.

In step S7, the door lock controllers 24d, 24p start being operated by using the electric power that is supplied from the capacitor 27. Then, in step S8, the door lock controllers 24d, 24p execute unlocking control. That is, the door lock controllers 24d, 24p respectively operate the actuators of the door locks 15d, 15p by transmitting the unlocking signal to the door locks 15d, 15p and thereby unlock the doors 14d, 14p. Step S8 corresponds to an "unlocking step" according to the present invention.

After transmitting the unlocking signal, in step S9, the door lock controllers 24d, 24p stop being operated by using the electric power that is supplied from the backup power supply 27.

Next, a description will be made on operational effects based on the configuration of this embodiment.

According to the above configuration, in the case where the vehicle 1 collides with the obstacle, first, in the discharging step, the electric power of the inverter 13 is discharged by using the electric power that is supplied from the capacitor 27. Then, after the lapse of the specified time period from the initiation timing of the discharging step and after termination of the discharging step, in the unlocking step, the doors 14d, 14p are unlocked by using the electric power that is supplied from the capacitor 27. Since the timing at which a prominent reduction in voltage occurs differs between the motor controller 23 and the door lock controllers 24d, 24p, electric power in an amount sufficient for operation of each thereof is supplied. As a result, the electric power of the inverter 13 can be discharged, and the doors 14d, 14p of the vehicle 1 can be unlocked.

After the termination of the discharging step, the unlocking step is initiated. According to this configuration, it is possible to further reliably supply the electric power, the amount of which is sufficient for the operation of each of the motor controller 23 and the door lock controllers 24d, 24p. As a result, the electric power of the inverter 13 can be discharged, and the doors 14d, 14p of the vehicle 1 can be unlocked.

In the above embodiment, as illustrated in Fig. 1, the inverter 13, the motor controller 23, and the door lock controllers 24d, 24p are electrically connected to the capacitor 27. A switchable relay may be provided to electrically connect/ disconnect at least one of the inverter 13, the motor controller 23 and the door lock controllers 24d, 24p to/from the capacitor 27. In this case, for example, the relay is switched such that at least one of the inverter 13, the motor controller 23 and the door lock controllers 24d, 24p is electrically connected to the capacitor 27 on the basis of the collision signal received from the collision determination device 25. In such a case, only when the vehicle 1 collides with the obstacle, electric power can be supplied from the capacitor 27.

### [Description of Reference Signs and Numerals]

- 1:: Vehicle
- 12:: Motor
- 13:: Inverter (in-vehicle equipment)
- 14d, 14p:: Door
- 15d, 15p:: Door lock
- 2:: Vehicle power supply apparatus
- 21:: Drive power supply
- 22:: Auxiliary power supply
- 23:: Motor controller
- 24d, 24p:: Door lock controller
- 25:: Collision determination device
- 27:: Capacitor

## Claims

1. A control method for a vehicle power supply apparatus (2),
the vehicle power supply apparatus (2) including:
a drive power supply (21) configured to supply electric power to a motor (12) configured to generate drive power of a vehicle (1);
an auxiliary power supply (22) configured to supply the electric power to a motor controller (23) configured to control supply of the electric power to the motor (12) and a door lock controller (24d, 24p) configured to control supply of the electric power to a door lock (15d, 15p) configured to lock or unlock a door (14d, 14p) of the vehicle (1); and
a capacitor (27) that is provided as a component separate from the drive power supply (21) and the auxiliary power supply (22) and configured to supply the electric power,
the control method comprising:
a collision determination step of determining whether the vehicle (1) has collided with an obstacle;
a discharging step of operating the motor controller (23) by using the electric power supplied from the capacitor (27) in the case where it is determined in the collision determination step that the vehicle (1) has collided with the obstacle, and discharging the electric power of an inverter (13) that is supplied with the electric power from the drive power supply (21) prior to the collision of the vehicle (1) with the obstacle by supplying electric charges stored in the inverter (13) to the motor (12); and
initiating an unlocking step of operating the door lock controller (24d, 24p) by using the electric power supplied from the capacitor (27) and unlocking the door (14d, 14p) after a lapse of a specified time period since initiation timing of the discharging step and after the discharging step is terminated.

2. The control method for the vehicle power supply apparatus according to claim 1, wherein at least one of the drive power supply (21) and the auxiliary power supply (22) is a battery.

3. The control method for the vehicle power supply apparatus according to any one of the preceding claims, wherein the vehicle power supply apparatus (2) further includes a relay configured to electrically connect or disconnect at least one of the inverter (13), the motor controller (23) and the door lock controller (24d, 24p) to or from the capacitor (27),
the control method further includes
switching the relay so as to electrically connect at least one of the inverter (13), the motor controller (23) and the door lock controller (24d, 24p) to the capacitor (27) when the vehicle (1) collides with the obstacle, and/or
switching the relay so as to electrically disconnect at least one of the inverter (13), the motor controller (23) and the door lock controller (24d, 24p) from the capacitor (27) when the vehicle (1) does not collide with the obstacle.

4. A vehicle power supply apparatus (2) comprising:
a motor controller (23) configured to control supply of electric power to a motor (12) configured to generate drive power of a vehicle (1);
a door lock controller (24d, 24p) configured to control supply of the electric power to a door lock (15d, 15p) configured to lock or unlock a door (14d, 14p) of the vehicle (1);
a drive power supply (21) configured to supply the electric power to the motor (12);
an auxiliary power supply (22) configured to supply the electric power to the motor controller (23) and the door lock controller (24d, 24p);
a capacitor (27) that is provided as a component separate from the drive power supply (21) and the auxiliary power supply (22) and configured to supply the electric power; and
a collision determination device (25) configured to determine whether the vehicle (1) has collided with an obstacle, wherein
in the case where the collision determination device (25) determines that the vehicle (1) has collided with the obstacle,
the motor controller (23) is configured to be operated by using the electric power that is supplied from the capacitor (27), and configured to execute discharge control for discharging the electric power of an inverter (13) that is supplied with the electric power from the drive power supply (21) prior to the collision of the vehicle (1) with the obstacle by supplying electric charges stored in the inverter (13) to the motor (12), and
after a lapse of a specified time period since execution initiation timing of the discharge control and after termination of the execution of the discharge control, the door lock controller (24d, 24p) is configured to be operated by using the electric power supplied from the capacitor (27) and configured to start executing unlocking control for unlocking the door (14d, 14p).

5. The vehicle power supply apparatus according to claim 4, wherein at least one of the drive power supply (21) and the auxiliary power supply (22) is a battery.

6. The vehicle power supply apparatus according to claim 4 or 5, further comprising a relay configured to electrically connect or disconnect at least one of the inverter (13), the motor controller (23) and the door lock controller (24d, 24p) to or from the capacitor (27), wherein
the relay is configured to electrically connect at least one of the inverter (13), the motor controller (23) and the door lock controller (24d, 24p) to the capacitor (27) when the vehicle (1) collides with the obstacle, and/or
the relay is configured to electrically disconnect at least one of the inverter (13), the motor controller (23) and the door lock controller (24d, 24p) from the capacitor (27) when the vehicle (1) does not collide with the obstacle.

7. A vehicle (1) comprising:
a motor (12) configured to generate drive power of the vehicle (1);
an inverter (13) configured to supply electric charges stored in the inverter (13) to the motor (12);
a door (14d, 14p); and
the vehicle power supply apparatus (2) of any one of claims 4 to 6.

8. A computer program product comprising computer-readable instructions which, when loaded and executed on the vehicle power supply apparatus (2) of any one of claims 4 to 6, perform the method of any one of claims 1 to 3.

## Patentansprüche

1. Ein Verfahren zur Steuerung einer Fahrzeug-Stromversorgungsvorrichtung (2),
wobei die Fahrzeug-Stromversorgungsvorrichtung (2) Folgendes beinhaltet:
eine Antriebsstromversorgung (21), die dazu konfiguriert ist, elektrische Energie einem Motor (12) zuzuführen, der dazu konfiguriert ist, Antriebsleistung für ein Fahrzeug (1) zu erzeugen;
eine Hilfsstromversorgung (22), die dazu konfiguriert ist, elektrische Energie einer Motorsteuerung (23) zuzuführen, die dazu konfiguriert ist, die Zufuhr der elektrischen Energie zum Motor (12) zu steuern, und einer Türverriegelungssteuerung (24d, 24p) zuzuführen, die dazu konfiguriert ist, die Zufuhr der elektrischen Energie zu einem Türschloss (15d, 15p) zu steuern, das dazu konfiguriert ist, eine Tür (14d, 14p) des Fahrzeugs (1) zu verriegeln oder zu entriegeln; und
einen Kondensator (27), der als von der Antriebsstromversorgung (21) und der Hilfsstromversorgung (22) getrennte Komponente bereitgestellt wird und dazu konfiguriert ist, die elektrische Energie zu liefern,
wobei das Verfahren Folgendes umfasst:
einen Kollisionsfeststellungsschritt zum Feststellen, ob das Fahrzeug (1) mit einem Hindernis kollidiert ist;
einen Entladeschritt des Betreibens der Motorsteuerung (23) unter Verwendung der vom Kondensator (27) zugeführten elektrischen Energie, falls im Kollisionsfeststellungsschritt festgestellt wird, dass das Fahrzeug (1) mit dem Hindernis kollidiert ist, und des Entladens der elektrischen Energie eines Wechselrichters (13), dem die elektrische Energie von der Antriebsstromversorgung (21) vor der Kollision des Fahrzeugs (1) mit dem Hindernis zugeführt wird, durch Zuführen der im Wechselrichter (13) gespeicherten elektrischen Ladung zum Motor (12); und
Einleiten eines Entriegelungsschritts des Betätigens der Türverriegelungssteuerung (24d, 24p) unter Verwendung der vom Kondensator (27) gelieferten elektrischen Energie, und des Entriegelns der Tür (14d, 14p) nach Ablauf einer festgelegten Zeitspanne seit dem Startzeitpunkt des Entladeschritts und nach Beendigung des Entladeschritts.

2. Das Verfahren zur Steuerung der Fahrzeug-Stromversorgungsvorrichtung nach Anspruch 1, wobei mindestens eine der Antriebsstromversorgung (21) und der Hilfsstromversorgung (22) eine Batterie ist.

3. Das Verfahren zur Steuerung der Fahrzeug-Stromversorgungsvorrichtung nach irgendeinem der vorstehenden Ansprüche, wobei die Fahrzeug-Stromversorgungsvorrichtung (2) ferner ein Relais beinhaltet, das dazu konfiguriert ist, mindestens eine der folgenden Komponenten: den Wechselrichter (13), die Motorsteuerung (23) und die Türverriegelungssteuerung (24d, 24p) elektrisch mit dem Kondensator (27) zu verbinden oder von diesem zu trennen,
wobei das Verfahren ferner Folgendes beinhaltet
Schalten des Relais, um mindestens eine der folgenden Komponenten: den Wechselrichter (13), die Motorsteuerung (23) und die Türverriegelungssteuerung (24d, 24p) elektrisch mit dem Kondensator (27) zu verbinden, wenn das Fahrzeug (1) mit dem Hindernis kollidiert, und/oder
Schalten des Relais, um mindestens eine der folgenden Komponenten: den Wechselrichter (13), die Motorsteuerung (23) und die Türverriegelungssteuerung (24d, 24p) elektrisch vom Kondensator (27) zu trennen, wenn das Fahrzeug (1) nicht mit dem Hindernis kollidiert.

4. Eine Fahrzeug-Stromversorgungsvorrichtung (2), die Folgendes umfasst:
eine Motorsteuerung (23), die dazu konfiguriert ist, die Zufuhr der elektrischen Energie zum Motor (12) zu steuern, der dazu konfiguriert ist, Antriebsleistung für ein Fahrzeug (1) zu erzeugen;
eine Türverriegelungssteuerung (24d, 24p), die dazu konfiguriert ist, die Zufuhr der elektrischen Energie zu einem Türschloss (15d, 15p) zu steuern, das dazu konfiguriert ist, eine Tür (14d, 14p) des Fahrzeugs (1) zu verriegeln oder zu entriegeln;
eine Antriebsstromversorgung (21), die dazu konfiguriert ist, die elektrische Energie einem Motor (12) zuzuführen;
eine Hilfsstromversorgung (22), die dazu konfiguriert ist, die elektrische Energie der Motorsteuerung (23) und der Türverriegelungssteuerung (24d, 24p) zuzuführen;
einen Kondensator (27), der als von der Antriebsstromversorgung (21) und der Hilfsstromversorgung (22) getrennte Komponente bereitgestellt wird und dazu konfiguriert ist, die elektrische Energie zu liefern; und
eine Kollisionsfeststellungseinrichtung (25), die dazu konfiguriert ist, festzustellen, ob das Fahrzeug (1) mit einem Hindernis kollidiert ist, wobei
für den Fall, dass die Kollisionsfeststellungseinrichtung (25) feststellt, dass das Fahrzeug (1) mit dem Hindernis kollidiert ist,
die Motorsteuerung (23) dazu konfiguriert ist, unter Verwendung der vom Kondensator (27) zugeführten elektrischen Energie betrieben zu werden, und dazu konfiguriert ist, eine Entladungssteuerung durchzuführen, um die elektrische Energie eines Wechselrichters (13), der vor der Kollision des Fahrzeugs (1) mit dem Hindernis mit elektrischer Energie aus der Antriebsstromversorgung (21) versorgt wurde, zu entladen, indem im Wechselrichter (13) gespeicherte elektrische Ladungen an den Motor (12) abgegeben werden, und
nach Ablauf einer festgelegten Zeitspanne seit dem Startzeitpunkt der Entladungssteuerung und nach Beendigung der Ausführung der Entladungssteuerung die Türverriegelungssteuerung (24d, 24p) dazu konfiguriert ist, unter Verwendung der vom Kondensator (27) zugeführten elektrischen Energie betrieben zu werden, und dazu konfiguriert ist, mit der Ausführung einer Entriegelungssteuerung zum Entriegeln der Tür (14d, 14p) zu beginnen.

5. Die Fahrzeug-Stromversorgungsvorrichtung nach Anspruch 4, wobei mindestens eine der Antriebsstromversorgung (21) und der Hilfsstromversorgung (22) eine Batterie ist.

6. Die Fahrzeug-Stromversorgungsvorrichtung nach Anspruch 4 oder 5, die ferner ein Relais umfasst, das dazu konfiguriert ist, eine der folgenden Komponenten: den Wechselrichter (13), die Motorsteuerung (23) und die Türverriegelungssteuerung (24d, 24p) elektrisch mit dem Kondensator (27) zu verbinden oder von diesem zu trennen, wobei
das Relais dazu konfiguriert ist, mindestens eine der folgenden Komponenten: den Wechselrichter (13), die Motorsteuerung (23) und die Türverriegelungssteuerung (24d, 24p) elektrisch mit dem Kondensator (27) zu verbinden, wenn das Fahrzeug (1) mit dem Hindernis kollidiert, und/oder
das Relais dazu konfiguriert ist, mindestens eine der folgenden Komponenten: den Wechselrichter (13), die Motorsteuerung (23) und die Türverriegelungssteuerung (24d, 24p) elektrisch vom Kondensator (27) zu trennen, wenn das Fahrzeug (1) nicht mit dem Hindernis kollidiert.

7. Ein Fahrzeug (1), das Folgendes umfasst:
einen Motor (12), der dazu konfiguriert ist, Antriebsleistung für das Fahrzeug (1) zu erzeugen;
einen Wechselrichter (13), der dazu konfiguriert ist, im Wechselrichter (13) gespeicherte elektrische Ladungen an den Motor (12) abzugeben;
eine Tür (14d, 14p); und
die Fahrzeug-Stromversorgungsvorrichtung (2) nach irgendeinem der Ansprüche von 4 bis 6.

8. Ein Computerprogrammprodukt, das computerlesbare Anweisungen umfasst, die, wenn sie auf die Fahrzeug-Stromversorgungsvorrichtung (2) nach irgendeinem der Ansprüche von 4 bis 6 geladen und dort ausgeführt werden, das Verfahren nach irgendeinem der Ansprüche von 1 bis 3 ausführen.

## Revendications

1. Un procédé de commande pour un dispositif d'alimentation électrique de véhicule (2), ledit dispositif d'alimentation électrique de véhicule (2) incluant :
une alimentation électrique d'entraînement (21) configurée pour fournir de l'énergie électrique à un moteur (12) configuré pour générer une puissance d'entraînement d'un véhicule (1) ;
une alimentation électrique auxiliaire (22) configurée pour fournir de l'énergie électrique à un dispositif de commande de moteur (23) configuré pour commander la fourniture d'énergie électrique au moteur (12), et à un dispositif de commande de verrouillage de porte (24d, 24p) configuré pour commander la fourniture d'énergie électrique à une serrure de porte (15d, 15p) configurée pour verrouiller ou déverrouiller une porte (14d, 14p) du véhicule (1) ; et
un condensateur (27) qui est prévu en tant que composant distinct de l'alimentation électrique d'entraînement (21) et de l'alimentation électrique auxiliaire (22) et configuré pour fournir l'énergie électrique,
le procédé de commande comprenant :
une étape de détermination de collision consistant à déterminer si le véhicule (1) est entré en collision avec un obstacle ;
une étape de décharge consistant à faire fonctionner le dispositif de commande de moteur (23) en utilisant l'énergie électrique fournie par le condensateur (27) dans le cas où il est déterminé, lors de l'étape de détermination de collision, que le véhicule (1) est entré en collision avec l'obstacle, et à décharger l'énergie électrique d'un onduleur (13) alimenté par l'alimentation électrique d'entraînement (21) avant la collision du véhicule (1) avec l'obstacle, en fournissant au moteur (12) les charges électriques stockées dans l'onduleur (13) ; et
initier une étape de déverrouillage consistant à faire fonctionner le dispositif de commande de verrouillage de porte (24d, 24p) en utilisant l'énergie électrique fournie par le condensateur (27), et à déverrouiller la porte (14d, 14p) après l'écoulement d'un laps de temps spécifié depuis un moment d'initiation de l'étape de décharge et après la fin de l'exécution de l'étape de décharge.

2. Le procédé de commande pour le dispositif d'alimentation électrique de véhicule d'après la revendication 1, sachant qu'au moins l'une parmi l'alimentation électrique d'entraînement (21) et l'alimentation électrique auxiliaire (22) est une batterie.

3. Le procédé de commande pour le dispositif d'alimentation électrique de véhicule d'après l'une quelconque des revendications précédentes, sachant que le dispositif d'alimentation électrique de véhicule (2) inclut en outre un relais configuré pour connecter ou déconnecter électriquement au moins l'un parmi l'onduleur (13), le dispositif de commande de moteur (23) et le dispositif de commande de verrouillage de porte (24d, 24p) au condensateur (27) ou de celui-ci,
le procédé de commande comprenant en outre :
la commutation du relais de manière à connecter électriquement au moins l'un parmi l'onduleur (13), le dispositif de commande de moteur (23) et le dispositif de commande de verrouillage de porte (24d, 24p) au condensateur (27) lorsque le véhicule (1) entre en collision avec l'obstacle, et/ou
la commutation du relais de manière à déconnecter électriquement au moins l'un parmi l'onduleur (13), le dispositif de commande de moteur (23) et le dispositif de commande de verrouillage de porte (24d, 24p) du condensateur (27) lorsque le véhicule (1) n'entre pas en collision avec l'obstacle.

4. Un dispositif d'alimentation électrique de véhicule (2) comprenant :
un dispositif de commande de moteur (23) configuré pour commander la fourniture d'énergie électrique à un moteur (12) configuré pour générer la puissance d'entraînement d'un véhicule (1) ;
un dispositif de commande de verrouillage de porte (24d, 24p) configuré pour commander la fourniture d'énergie électrique à une serrure de porte (15d, 15p) configurée pour verrouiller ou déverrouiller une porte (14d, 14p) du véhicule (1) ;
une alimentation électrique d'entraînement (21) configurée pour fournir l'énergie électrique au moteur (12) ;
une alimentation électrique auxiliaire (22) configurée pour fournir l'énergie électrique au dispositif de commande de moteur (23) et au dispositif de commande de verrouillage de porte (24d, 24p) ;
un condensateur (27) qui est prévu en tant que composant distinct de l'alimentation électrique d'entraînement (21) et de l'alimentation électrique auxiliaire (22) et configuré pour fournir l'énergie électrique ; et
un dispositif de détermination de collision (25) configuré pour déterminer si le véhicule (1) est entré en collision avec un obstacle, sachant que
dans le cas où le dispositif de détermination de collision (25) détermine que le véhicule (1) est entré en collision avec l'obstacle,
le dispositif de commande de moteur (23) est configuré pour être mis en fonctionnement en utilisant l'énergie électrique fournie par le condensateur (27), et configuré pour exécuter une commande de décharge destinée à décharger l'énergie électrique d'un onduleur (13) auquel l'énergie électrique est fournie par l'alimentation électrique d'entraînement (21) avant la collision du véhicule (1) avec l'obstacle en fournissant au moteur (12) les charges électriques stockées dans l'onduleur (13), et que
après l'écoulement d'un laps de temps spécifié depuis un moment d'initiation de la commande de décharge et après la fin de l'exécution de la commande de décharge, le dispositif de commande de verrouillage de porte (24d, 24p) est configuré pour être mis en fonctionnement en utilisant l'énergie électrique fournie par le condensateur (27) et configuré pour commencer à exécuter une commande de déverrouillage destinée à déverrouiller la porte (14d, 14p).

5. Le dispositif d'alimentation électrique de véhicule d'après la revendication 4, sachant qu'au moins l'une parmi l'alimentation électrique d'entraînement (21) et l'alimentation électrique auxiliaire (22) est une batterie.

6. Le dispositif d'alimentation électrique de véhicule d'après la revendication 4 ou 5, comprenant en outre un relais configuré pour connecter ou déconnecter électriquement au moins l'un parmi l'onduleur (13), le dispositif de commande de moteur (23) et le dispositif de commande de verrouillage de porte (24d, 24p) au condensateur (27) ou de celui-ci, sachant que
le relais est configuré pour connecter électriquement au moins l'un parmi l'onduleur (13), le dispositif de commande de moteur (23) et le dispositif de commande de verrouillage de porte (24d, 24p) au condensateur (27) lorsque le véhicule (1) entre en collision avec l'obstacle, et/ou
le relais est configuré pour déconnecter électriquement au moins l'un parmi l'onduleur (13), le dispositif de commande de moteur (23) et le dispositif de commande de verrouillage de porte (24d, 24p) du condensateur (27) lorsque le véhicule (1) n'entre pas en collision avec l'obstacle.

7. Un véhicule (1) comprenant :
un moteur (12) configuré pour générer une puissance d'entraînement du véhicule (1) ;
un onduleur (13) configuré pour fournir au moteur (12) des charges électriques stockées dans l'onduleur (13) ;
une porte (14d, 14p) ; et
le dispositif d'alimentation électrique de véhicule (2) d'après l'une quelconque des revendications de 4 à 6.

8. Un produit-programme informatique comprenant des instructions lisibles par ordinateur qui, lorsqu'elles sont chargées et exécutées sur le dispositif d'alimentation électrique de véhicule (2) d'après l'une quelconque des revendications de 4 à 6, mettent en œuvre le procédé d'après l'une quelconque des revendications de 1 à 3.
